# EUROPEAN PATENT SPECIFICATION

(11) **EP 4 195 603 B1**
(45) Date of publication and mention of the grant of the patent: **02.09.2026**
(21) Application number: 21852367.8
(22) Date of filing: 21.07.2021
(51) Int. Cl.: H04W 74/0808, H04L 27/26, H04W 74/00, H04W 74/0833

(54) **METHOD AND DEVICE FOR TRANSMITTING/RECEIVING SIGNALS IN WIRELESS COMMUNICATION SYSTEM**
VERFAHREN UND VORRICHTUNG ZUM SENDEN/EMPFANGEN VON SIGNALEN IN EINEM DRAHTLOSKOMMUNIKATIONSSYSTEM
PROCÉDÉ ET DISPOSITIF POUR L'ÉMISSION/RÉCEPTION DE SIGNAUX DANS UN SYSTÈME DE COMMUNICATION SANS FIL

(30) Priority: 05.08.2020 KR 20200098196
(43) Date of publication of application: 14.06.2023
(73) Proprietor: LG Electronics Inc., Seoul 07336 (KR)
(72) Inventor: SHIN, Seokmin, Seoul 06772 (KR); KIM, Seonwook, Seoul 06772 (KR); YANG, Suckchel, Seoul 06772 (KR)
(74) Representative: Frenkel, Matthias Alexander
(86) International application number: PCT/KR2021/009419
(87) International publication number: WO 2022/030823

(56) References cited:
- KR-B1- 102 124 496
- NOKIA NOKIA SHANGHAI BELL: "Feature Lead's Summary #2 on Channel Access Procedures", vol. RAN WG1, no. Chongqing, P.R. China; 20191014 - 20191020, 22 October 2019 (2019-10-22), XP051798948, Retrieved from the Internet <URL:https://ftp.3gpp.org/tsg_ran/WG1_RL1/TSGR1_98b/Docs/R1-1911706.zip R1-1911706_NR-U channel access FL summary 2.docx> [retrieved on 20191022]
- QUALCOMM INCORPORATED: "Channel access procedures for NR unlicensed", vol. RAN WG1, no. Reno, USA; 20191118 - 20191122, 9 November 2019 (2019-11-09), XP051823701, Retrieved from the Internet <URL:https://ftp.3gpp.org/tsg_ran/WG1_RL1/TSGR1_99/Docs/R1-1912938.zip R1-1912938 7.2.2.2.1 Channel access procedures for NR unlicensed.docx> [retrieved on 20191109]
- MODERATOR (QUALCOMM INCORPORATED): "Moderator's summary of initial access signals and channels for NR-U", vol. RAN WG1, no. e-Meeting ;20200420 - 20200430, 20 April 2020 (2020-04-20), XP052342804, Retrieved from the Internet <URL:https://ftp.3gpp.org/tsg_ran/WG1_RL1/TSGR1_100b_e/Docs/R1-2002734.zip R1-2002734 7.2.2.1.1 Summary for initial access signals and channels for NR-U.docx> [retrieved on 20200420]
- MODERATOR (QUALCOMM INCORPORATED): "Moderator’s summary of initial access signals and channels for NR-U", 3GPP DRAFT; R1-2002734, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Online Meeting ;20200420 - 20200430, 20 April 2020 (2020-04-20), Mobile Competence Centre ; 650, route des Lucioles ; F-06921 Sophia-Antipolis Cedex ; France , XP051876750
- INTERDIGITAL: "Summary of RACH and UL LBT Failure", 3GPP DRAFT; R2-2001911, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. 20200224 - 20200306, 11 March 2020 (2020-03-11), Mobile Competence Centre ; 650, route des Lucioles ; F-06921 Sophia-Antipolis Cedex ; France , XP051864554
- LENOVO, MOTOROLA MOBILITY: "Extensions for Channel Access Procedures", 3GPP DRAFT; R1-1913053, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Reno, United States; 20191118 - 20191122, 8 November 2019 (2019-11-08), Mobile Competence Centre ; 650, route des Lucioles ; F-06921 Sophia-Antipolis Cedex ; France , XP051820286
- QUALCOMM INCORPORATED: "Qualcomm Incorporated", 3GPP DRAFT; R1-2000956, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. 20200224 - 20200306, 15 February 2020 (2020-02-15), Mobile Competence Centre ; 650, route des Lucioles ; F-06921 Sophia-Antipolis Cedex ; France , XP051853531

## Description

### TECHNICAL FIELD

The present disclosure relates to a method of transmitting and receiving a signal by a user equipment in a wireless communication system, to an apparatus for a user equipment, and to a computer-readable storage medium, as set out in the appended set of claims.

### BACKGROUND ART

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may include one of code division multiple access (CDMA) system, frequency division multiple access (FDMA) system, time division multiple access (TDMA) system, orthogonal frequency division multiple access (OFDMA) system, single carrier frequency division multiple access (SC-FDMA) system, and the like. Nokia, Nokia Shanghai Bell: "Feature Lead's Summary #2 on Channel Access Procedures", R1-1911706, 3GPP TSG RAN WG1 Meeting #98bis, Chongqing, P.R. China, 14th - 20th October, 2019, 22 October 2019, is directed to channel access mechanism details for FBE. According to a proposal, for idle mode UEs, a gNB configures the LBT type together with RACH resources. According to another proposal, UE can determine to perform LBT to transmit a PRACH if DL signal/channel associated with the PRACH is successfully detected or received. A timing gap between PRACH and associated DL signals and channels is required. For LBT by a UE prior to transmission of a UL burst within a gNB-initiated channel occupancy as an LBE device, for gap durations shorter than 25 microseconds, Cat 2 LBT can be indicated to the UE if the gap is 16 microseconds.

### DISCLOSURE

### Technical Problem

An object of the present disclosure is to provide a signal transmission/reception method for efficiently performing a random access procedure in a wireless communication system and an apparatus therefor.

### Technical Solution

According to an aspect of the present disclosure, provided herein is a method of transmitting and receiving a signal by a user equipment (UE) in a wireless communication system as defined by independent claim 1.

In another aspect of the present disclosure, provided herein is an apparatus for a user equipment (UE) as defined by independent claim 6.

In another aspect of the present disclosure, provided herein is a computer-readable storage medium as defined by independent claim 12. Specific embodiments are defined by the dependent claims.

Any embodiments, aspects, examples or implementations not being part of the claims, are only presented as information.

### Advantageous Effects

According to an embodiment of the present disclosure, when a random access procedure is performed between a user equipment (UE) and a base station (BS), a more efficient random access procedure may be performed through an operation differentiated from the prior art.

The effects of the present disclosure are not limited to what has been described hereinabove and other effects may be derived from embodiments of the present disclosure.

### Brief Description of Drawings

FIG. 1 illustrates a radio frame structure.
FIG. 2 illustrates a resource grid during the duration of a slot.
FIG. 3 illustrates a self-contained slot structure.
FIG. 4 illustrates a wireless communication system supporting an unlicensed band.
FIG. 5 illustrates an exemplary method of occupying resources in an unlicensed band.
FIGS. 6 and 7 are flowcharts illustrating channel access procedures (CAPs) for signal transmission in an unlicensed band.
FIGS. 8 and 9 show a random access process.
FIG. 10 illustrates a resource block (RB) interlace.
FIG. 11 is a diagram illustrating random access procedure according to the embodiments of the present disclosure.
FIGS. 12 to 15 show an example of apparatuses according to an embodiment of the present disclosure.

### BEST MODE

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

For clarity of description, the present disclosure will be described in the context of a 3GPP communication system (e.g., LTE and NR), which should not be construed as limiting the spirit of the present disclosure. LTE refers to a technology beyond 3GPP TS 36.xxx Release 8. Specifically, the LTE technology beyond 3GPP TS 36.xxx Release 10 is called LTE-A, and the LTE technology beyond 3GPP TS 36.xxx Release 13 is called LTE-A pro. 3GPP NR is the technology beyond 3GPP TS 38.xxx Release 15. LTE/NR may be referred to as a 3GPP system. "xxx" specifies a technical specification number. LTE/NR may be generically referred to as a 3GPP system. For the background technology, terminologies, abbreviations, and so on as used herein, refer to technical specifications published before the present disclosure. For example, the following documents may be referred to.
3GPP LTE
   - 36.211: Physical channels and modulation
   - 36.212: Multiplexing and channel coding
   - 36.213: Physical layer procedures
   - 36.300: Overall description
   - 36.331: Radio Resource Control (RRC)
3GPP NR
   - 38.211: Physical channels and modulation
   - 38.212: Multiplexing and channel coding
   - 38.213: Physical layer procedures for control
   - 38.214: Physical layer procedures for data
   - 38.300: NR and NG-RAN Overall Description
   - 38.331: Radio Resource Control (RRC) protocol specification

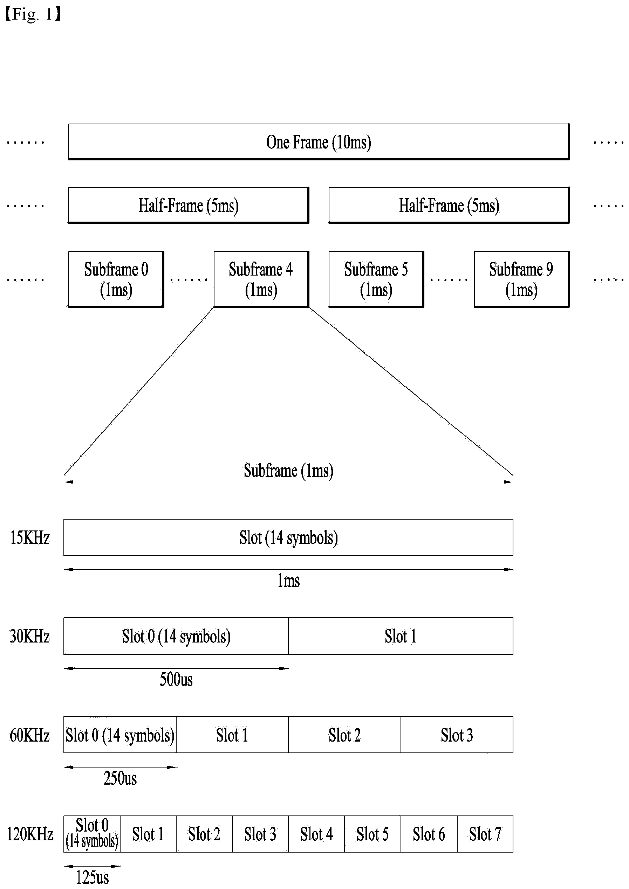

FIG. 1 illustrates a radio frame structure used for NR.

In NR, UL and DL transmissions are configured in frames. Each radio frame has a length of 10 ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transform-spread-OFDM (DFT-s-OFDM) symbol).

Table 1 exemplarily illustrates that the number of symbols per slot, the number of slots per frame, and the number of slots per subframe vary according to SCSs in a normal CP case.

**[Table 1]**

| SCS (15*2^u) | N^{slot}_{symb} | N^{frame,u}ₛₗₒₜ | N^{subfame,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

| | | | |
|---|---|---|---|
| * N^{slot}_{symb},: number of symbols in a slot * N^{frame,u}ₛₗₒₜ: number of slots in a frame * N^{subframe,u}ₛₗₒₜ: number of slots in a subframe | | | |

Table 2 illustrates that the number of symbols per slot, the number of slots per frame, and the number of slots per subframe vary according to SCSs in an extended CP case.

**[Table 2]**

| SCS (15*2^u) | N^{slot}_{symb} | N^{frame,u}ₛₗₒₜ | N^{subtrame,u}ₛₗₒₜ |
|---|---|---|---|
| 60KHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

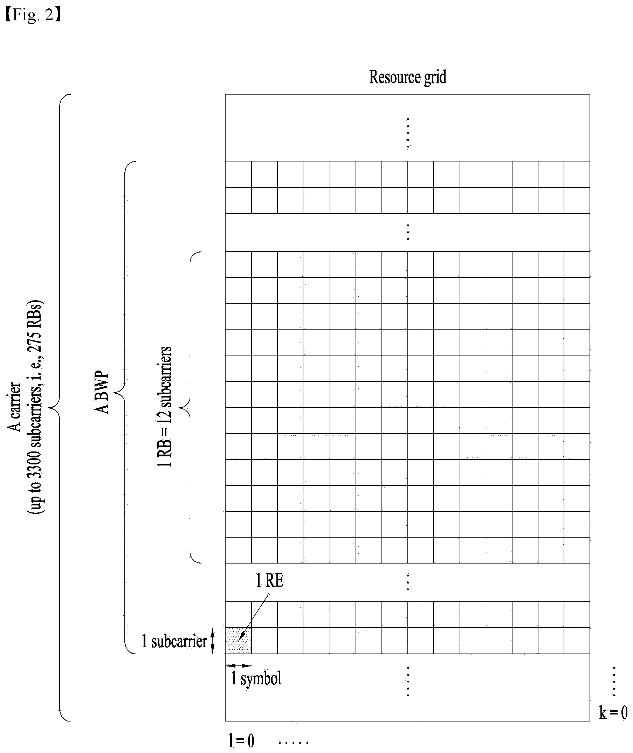

FIG. 2 illustrates a resource grid during the duration of one slot.

A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A plurality of RB interlaces (simply, interlaces) may be defined in the frequency domain. Interlace m∈{0, 1, ..., M-1} may be composed of (common) RBs {m, M+m, 2M+m, 3M+m,...}. M denotes the number of interlaces. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

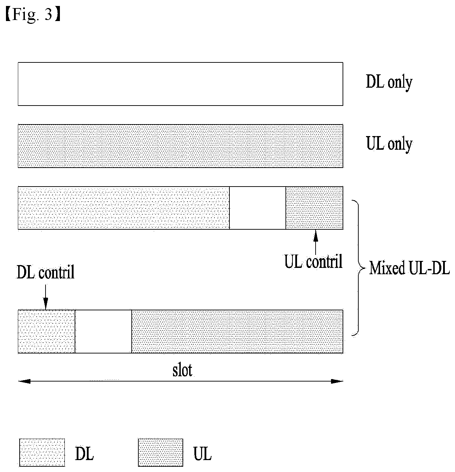

FIG. 3 illustrates a structure of a self-contained slot.

In the NR system, a frame has a self-contained structure in which a DL control channel, DL or UL data, a UL control channel, and the like may all be contained in one slot. For example, the first N symbols (hereinafter, DL control region) in the slot may be used to transmit a DL control channel, and the last M symbols (hereinafter, UL control region) in the slot may be used to transmit a UL control channel. N and M are integers greater than or equal to 0. A resource region (hereinafter, a data region) that is between the DL control region and the UL control region may be used for DL data transmission or UL data transmission. For example, the following configuration may be considered. Respective sections are listed in a temporal order.
1. DL only configuration
2. UL only configuration
3. Mixed UL-DL configuration
   - $DL region + Guard period \left(GP\right) + UL control region$
   - $DL control region + GP + UL region$
      * DL region: (i) DL data region, (ii) DL control region + DL data region
      * UL region: (i) UL data region, (ii) UL data region + UL control region

The PDCCH may be transmitted in the DL control region, and the PDSCH may be transmitted in the DL data region. The PUCCH may be transmitted in the UL control region, and the PUSCH may be transmitted in the UL data region. The GP provides a time gap in the process of the UE switching from the transmission mode to the reception mode or from the reception mode to the transmission mode. Some symbols at the time of switching from DL to UL within a subframe may be configured as the GP.

In the present disclosure, a base station (BS) may be, for example, a gNode B (gNB).

### 1. Wireless Communication System Supporting Unlicensed Band

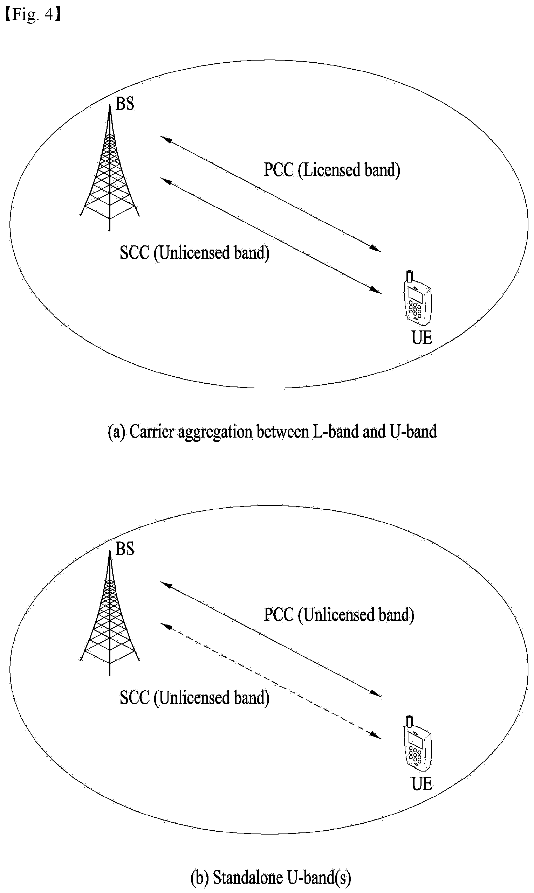

FIG. 4 illustrates an exemplary wireless communication system supporting an unlicensed band applicable to the present disclosure.

In the following description, a cell operating in a licensed band (L-band) is defined as an L-cell, and a carrier of the L-cell is defined as a (DL/UL) LCC. A cell operating in an unlicensed band (U-band) is defined as a U-cell, and a carrier of the U-cell is defined as a (DL/UL) UCC. The carrier/carrier-frequency of a cell may refer to the operating frequency (e.g., center frequency) of the cell. A cell/carrier (e.g., CC) is commonly called a cell.

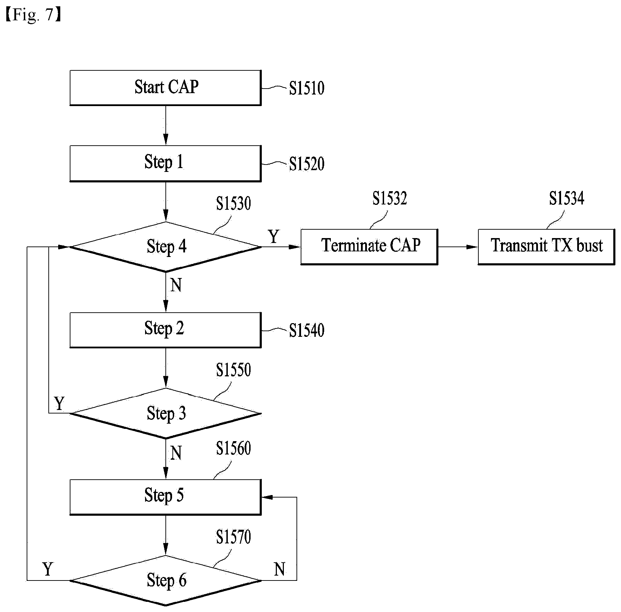

When a UE and a BS transmit and receive signals in a carrier-aggregated LCC and UCC as illustrated in FIG. 4(a), the LCC may be configured as a primary CC (PCC) and the UCC may be configured as a secondary CC (SCC). As illustrated in FIG. 7(b), the UE and the BS may transmit and receive signals in one UCC or a plurality of carrier-aggregated UCCs. That is, the UE and the BS may transmit and receive signals only in UCC(s) without an LCC.

(Unless otherwise specified), a signal transmission/reception operation in a U-band described in the present disclosure may be performed based on all the above-described deployment scenarios.

### Radio frame structure for U-band

Recently, standardization of a 5G system called new RAT (hereinafter, NR) is underway in 3GPP. The NR system supports a plurality of logical networks in a single physical system and is designed to support services (e.g., enhanced mobile broadband communication (eMBB), massive machine type communications (mMTC), and/or ultra-reliable and low latency communication (URLLC)) having various requirements by changing a transmission time interval (TTI) and/or an OFDM numerology (e.g., an OFDM symbol duration and/or a subcarrier spacing (SPS)). With recent emergence of smart devices, data traffic has been rapidly increased. Therefore, even the NR system considers using a U-band for cellular communication similar to licensed-assisted access (LAA) of a legacy LTE system. However, unlike legacy LAA, an NR cell in a U-band (hereinafter, NR U-cell) aims to support a standalone operation. To this end, physical uplink control channel (PUCCH), physical uplink shared channel (PUSCH), and/or physical random access channel (PRACH) transmission of the UE may be supported.

An NR frame structure (refer to FIG. 1) may be used for operation in the U-band. OFDM symbols occupied for UL/DL signal transmission in the frame structure for the operation in the U-band may be configured by the BS. Here, the OFDM symbols may be replaced with SC-FDM(A) symbols.

In the following description, a plurality of component carriers (CCs) (CC indexes) may be replaced with a plurality of BWPs (BWP indexes) configured in one (or more) CC(s) or (serving) cell(s) or with a plurality of CCs/cells each including a plurality of BWPs (i.e., CC (index)-BWP (index) combinations). In this situation, the proposed principle/operations of the present disclosure are also applicable in the same manner.

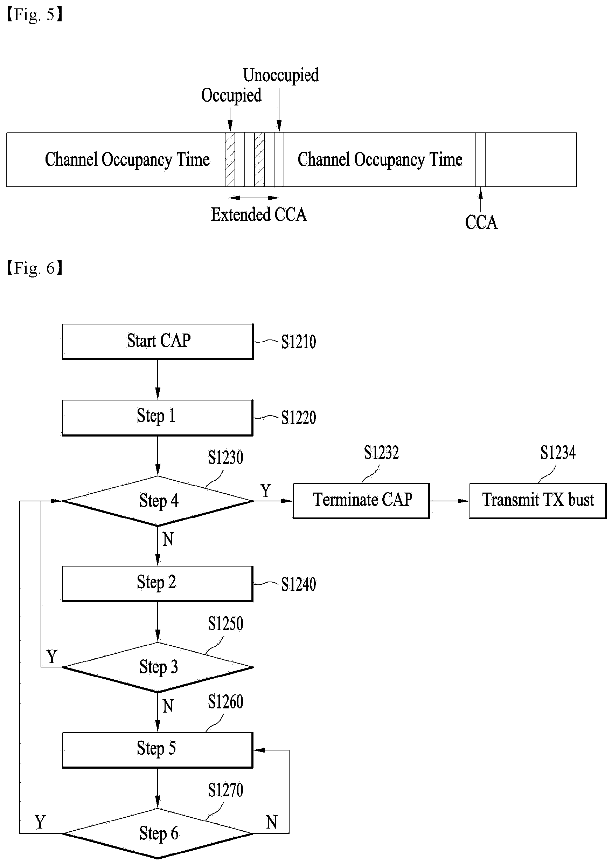

FIG. 5 illustrates an exemplary method of occupying resources in a U-band. According to regional regulations for the U-band, a communication node in the U-band needs to determine whether a corresponding channel is used by other communication node(s) before transmitting a signal. Specifically, the communication node may perform carrier sensing (CS) before transmitting the signal so as to check whether the other communication node(s) perform signal transmission. When the other communication node(s) perform no signal transmission, it is said that clear channel assessment (CCA) is confirmed. When a CCA threshold is predefined or configured by higher layer signaling (e.g., RRC signaling), if the detected channel energy is higher than the CCA threshold, the communication node may determine that the channel is busy. Otherwise, the communication node may determine that the channel is idle. When it is determined that the channel is idle, the communication node may start the signal transmission in the UCell. The Wi-Fi standard (802.11ac) specifies a CCA threshold of 62 dBm for non-Wi-Fi signals and a CCA threshold of -82 dBm for Wi-Fi signals. The sires of processes described above may be referred to as Listen-Before-Talk (LBT) or a channel access procedure (CAP). The LBT may be interchangeably used with the CAP or CCA.

Specifically, for DL reception/UL transmission in a U-band, one or more of the following channel access procedure (CAP) methods may be used in a wireless communication system related to the present disclosure.

### Method of transmitting DL signal in U-band

To transmit a DL signal in a U-band, the BS may indicate the configuration of OFDM symbols used in subframe #n to the UE by signaling. The term subframe may be replaced with slot or time unit (TU).

The BS may perform one of the following U-band access procedures (e.g., CAPs) to transmit a DL signal in the U-band.

### (1) First DL CAP method

FIG. 6 is a flowchart illustrating a DL CAP for DL signal transmission in a U-band, performed by a BS.

For DL signal transmission (e.g., transmission of a DL signal such as a PDSCH/PDCCH/enhanced PDCCH (EPDCCH)), the BS may initiate a CAP (S1210). The BS may randomly select a backoff counter N within a contention window (CW) according to step 1. N is set to an initial value Nᵢₙᵢₜ (S1220). Nᵢₙᵢₜ is a random value selected from the values between 0 and CWₚ. Subsequently, when the backoff counter value N is 0 according to step 4 (S1230; Y), the BS terminates the CAP (S1232). The BS may then perform a Tx burst transmission including transmission of a PDSCH/PDCCH/EPDCCH (S1234). On the contrary, when the backoff counter value N is not 0 (S1230; N), the BS decrements the backoff counter value by 1 according to step 2 (S1240). Subsequently, the BS checks whether the channel of U-cell(s) is idle (S1250). If the channel is idle (S1250; Y), the BS determines whether the backoff counter value is 0 (S1230). On the contrary, when the channel is not idle, that is, the channel is busy (S1250; N), the BS determines whether the channel is idle during a longer defer duration T_{d} (25 usec or longer) than a slot duration (e.g., 9 usec) according to step 5 (S1260). If the channel is idle during the defer duration (S1270; Y), the BS may resume the CAP. The defer duration may include a 16-usec duration and the immediately following mₚ consecutive slot durations (e.g., each being 9 usec). On the contrary, if the channel is busy during the defer duration (S 1270; N), the BS re-checks whether the channel of the U-cell(s) is idle during a new defer duration by performing step S1260 again.

Table 3 illustrates that mₚ, a minimum CW, a maximum CW, a maximum channel occupancy time (MCOT), and an allowed CW size applied to a CAP vary according to channel access priority classes.

**[Table 3]**

| Channel Access Priority Class (P) | *mₚ* | *CW*_{min,*p*} | *CW*_{max,*p*} | *T*_{*m*cot*p*} | allowed *CWₚ* sizes |
|---|---|---|---|---|---|
| 1 | 1 | 3 | 7 | 2 ms | {3,7} |
| 2 | 1 | 7 | 15 | 3 ms | {7,15} |
| 3 | 3 | 15 | 63 | 8 or 10 ms | {15,31,63} |
| 4 | 7 | 15 | 1023 | 8 or 10 ms | {15,31,63,127,255,511,1023} |

A CW size applied to the first DL CAP may be determined in various methods. For example, the CW size may be adjusted based on the probability of HARQ-ACK values corresponding to PDSCH transmission(s) within a predetermined time period (e.g., a reference TU) being determined as NACK. In the case where the BS performs a DL transmission including a PDSCH that is associated with a channel access priority class p on a carrier, if the probability z of HARQ-ACK values corresponding to PDSCH transmission(s) in reference subframe k (or reference slot k) being determined as NACK is at least 80%, the BS increases a CW value set for each priority class to the next higher allowed value. Alternatively, the BS maintains the CW value set for each priority class to be an initial value. A reference subframe (or reference slot) may be defined as the starting subframe (or slot) of the most recent transmission on the carrier made by the BS, for which at least some HARQ-ACK feedback is expected to be available.

### (2) Second DL CAP method

The BS may perform a DL signal transmission (e.g., a signal transmission including a discovery signal transmission, without a PDSCH) in a U-band according to the second DL CAP method described below.

When the signal transmission duration of the BS is equal to or less than 1 ms, the BS may transmit a DL signal (e.g., a signal including a discovery signal without a PDSCH) in the U-band immediately after sensing the channel to be idle for at least a sensing duration T_{drs}=25 us. T_{drs} includes a duration T_{f} (=16 us) following one sensing slot duration Tₛₗ (=9 us).

### (3) Third DL CAP method

The BS may perform the following CAPs for DL signal transmission on multiple carriers in a U-band.
1) Type A: The BS performs a CAP for multiple carriers based on a counter N defined for each carrier (a counter N considered in a CAP) and performs a DL signal transmission based on the CAP.
   - Type A1: The counter N for each carrier is determined independently, and a DL signal is transmitted on each carrier based on the counter N for the carrier.
   - Type A2: The counter N of a carrier with a largest CW size is set for each carrier, and a DL signal is transmitted on each carrier based on the counter N for the carrier.
2) Type B: The BS performs a CAP based on a counter N only for a specific one of a plurality of carriers and performs a DL signal transmission by checking whether the channels of the other carriers are idle before a signal transmission on the specific carrier.
   - Type B1: A single CW size is defined for a plurality of carriers, and the BS uses the single CW size in a CAP based on the counter N for a specific carrier.
   - Type B2: A CW size is defined for each carrier, and the largest of the CW sizes is used in determining Ninit for a specific carrier.

### Method of transmitting UL signal in U-band

For a UL signal transmission in a U-band, the BS may transmit information about a UL transmission period to the UE by signaling.

For a UL signal transmission in the U-band, the UE performs a contention-based CAP. For example, the UE may perform a Type 1 CAP or a Type 2 CAP for UL signal transmission in the U-band. In general, the UE may perform a CAP configured/indicated by the BS (e.g., Type 1 CAP or Type 2 CAP) for the UL signal transmission.

### (1) Type 1 UL CAP Method

FIG. 7 is a flowchart illustrating UE's Type 1 CAP operation for UL signal transmission.

To transmit a signal in the U-band, the UE may initiate a CAP (S1510). The UE may randomly select a backoff counter N within a contention window (CW) according to step 1. In this case, N is set to an initial value Nᵢₙᵢₜ (S1520). Nᵢₙᵢₜ may have a random value between 0 and CWₚ. If it is determined according to step 4 that the backoff counter value (N) is 0 (YES in S1530), the UE terminates the CAP (S1532). Then, the UE may perform Tx burst transmission (S1534). If the backoff counter value is non-zero (NO in S1530), the UE decreases the backoff counter value by 1 according to step 2 (S1540). The UE checks whether the channel of U-cell(s) is idle (S1550). If the channel is idle (YES in S1550), the UE checks whether the backoff counter value is 0 (S1530). On the contrary, if the channel is not idle in S1550, that is, if the channel is busy (NO in S1550), the UE checks whether the corresponding channel is idle for a defer duration T_{d} (longer than or equal to 25 usec), which is longer than a slot duration (e.g., 9 usec), according to step 5 (S1560). If the channel is idle for the defer duration (YES in S1570), the UE may resume the CAP. Here, the defer duration may include a duration of 16 usec and mₚ consecutive slot durations (e.g., 9 usec), which immediately follows the duration of 16 usec. If the channel is busy for the defer duration (NO in S1570), the UE performs step S1560 again to check whether the channel is idle for a new defer duration.

Table 4 shows that the values of mₚ, a minimum CW, a maximum CW, a maximum channel occupancy time (MCOT), and allowed CW sizes, which are applied to the CAP, vary depending on channel access priority classes.

**[Table 4]**

| Channel Access Priority Class (*p*) | *mₚ* | *CW*_{min,*p*} | *CW*_{max,*p*} | *T*_{*ulm*cot*p*} | allowed *CWₚ* sizes |
|---|---|---|---|---|---|
| 1 | 2 | 3 | 7 | 2 ms | {3,7} |
| 2 | 2 | 7 | 15 | 4 ms | {7,15} |
| 3 | 3 | 15 | 1023 | 6ms or 10 ms | {15,31,63,127,255,511,1023) |
| 4 | 7 | 15 | 1023 | 6ms or 10 ms | {15,31,63,127,255,511,1023} |
| NOTE1: For p = 3,4, *T*_{*ulm*cot*p*} -10ms if the higher layer parameter '*absenceOfAnyOtherTechnology-r14'*indicates TRUE, otherwise, *T*_{*ulm*cot*p*} =6ms. | | | | | |
| NOTE 2: When *T*_{*ulm*cot*p*}=6ms it may be increased to 8 ms by inserting one or more gaps. The minimum duration of a gap shall be 100 µs. The maximum duration before including any such gap shall be 6 ms. | | | | | |

The size of a CW applied to the Type 1 UL CAP may be determined in various ways. For example, the CW size may be adjusted depending on whether the value of of a new data indicator (NDI) for at least one HARQ process associated with HARQ_ID_ref, which is the HARQ process ID of a UL-SCH in a predetermined time period (e.g., a reference TU), is toggled. When the UE performs signal transmission using the Type 1 CAP associated with the channel access priority class p on a carrier, if the value of the NDI for the at least one HARQ process associated with HARQ_ID_ref is toggled, the UE may set CWₚ to CW_{min, p} for every priority class *p* ∈ {1,2,3,4}. Otherwise, the UE may increase CWₚ for every priority class *p* ∈ {1,2,3,4} to a next higher allowed value.

A reference subframe (or slot) n_{ref} is determined as follows.

When the UE receives a UL grant in a subframe (or slot) n_{g} and transmits a UL-SCH in subframes (or slots) n₀,n₁,...n_{w}, starting from the subframe (or slot) n₀ without a gap (the subframe (or slot) n_{w} is the most recent subframe (or slot) before a subframe (or slot) n_{g}-3 in which the UE has transmitted a UL-SCH based on a Type 1 CAP), the reference subframe (or slot) n_{ref} is the subframe (or slot) n₀.

### (2) Type 2 UL CAP Method

When the UE uses the Type 2 CAP to transmit a UL signal (including the PUSCH) in a U-band, the UE may transmit the UL signal (including the PUSCH) in the U-band immediately after sensing that the channel is idle at least for a sensing period T_{short_ul} of 25 us. T_{short_ul} includes a duration T_{f} of 16 us immediately followed by one slot duration Tₛₗ of 9 us. T_{f} includes an idle slot duration Tₛₗ at the start thereof.

### 2. Random Access Procedure

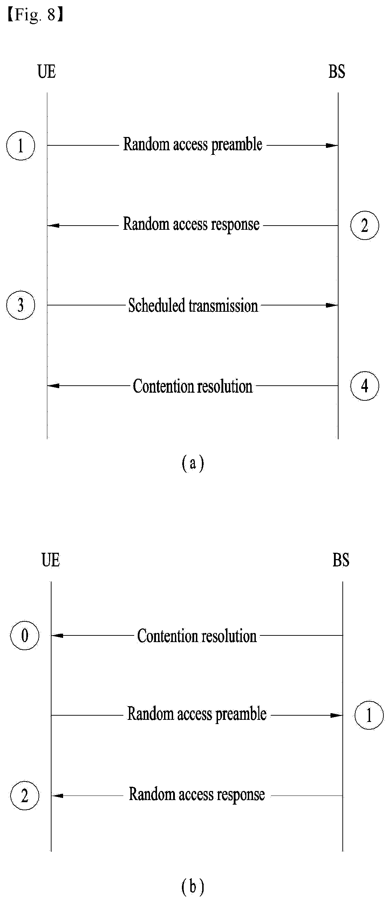

FIG. 8 illustrates random access procedures. FIG. 8(a) illustrates the contention-based random access procedure, and FIG. 8(b) illustrates the dedicated random access procedure.

Referring to FIG. 8(a), the contention-based random access procedure includes the following four steps. The messages transmitted in steps 1 to 4 may be referred to as message 1 (Msg1) to message 4 (Msg4), respectively.
- Step 1: The UE transmits an RACH preamble on a PRACH.
- Step 2: The UE receives a random access response (RAR) on a DL-SCH from the BS.
- Step 3: The UE transmits a Layer 2 (L2)/Layer 3 (L3) message on a UL-SCH to the BS.
- Step 4: The UE receives a contention resolution message on the DL-SCH from the BS.

The UE may receive random access information in system information from the BS.

When the UE needs random access, the UE transmits an RACH preamble to the BS as in step 1. The BS may identify each RACH preamble by a time/frequency resource (RACH occasion (RO)) in which the RACH preamble is transmitted, and a preamble index (PI).

Upon receipt of the RACH preamble from the UE, the BS transmits an RAR message to the UE as in step 2. To receive the RAR message, the UE monitors an L1/L2 PDCCH with a cyclic redundancy check (CRC) masked with a random access-RNTI (RA-RNTI), including scheduling information for the RAR message, within a preconfigured time window (e.g., ra-ResponseWindow). The PDCCH masked with the RA-RNTI may be transmitted only in a common search space. When receiving a scheduling signal masked with the RA-RNTI, the UE may receive an RAR message on a PDSCH indicated by the scheduling information. The UE then checks whether there is RAR information directed to the UE in the RAR message. The presence or absence of the RAR information directed to the UE may be determined by checking whether there is a random access preamble ID (RAPID) for the preamble transmitted by the UE. The index of the preamble transmitted by the UE may be identical to the RAPID. The RAR information includes the index of the corresponding RACH preamble, timing offset information (e.g., timing advance command (TAC)) for UL synchronization, UL scheduling information (e.g., UL grant) for Msg3 transmission, and UE temporary identification information (e.g., temporary-C-RNTI (TC-RNTI)).

Upon receipt of the RAR information, the UE transmits UL-SCH data (Msg3) on a PUSCH according to the UL scheduling information and the timing offset value, as in step 3. Msg3 may include the ID (or global ID) of the UE. Alternatively, Msg3 may include RRC connection request-related information (e.g., RRCSetupRequest message) for initial access. In addition, Msg3 may include a buffer status report (BSR) on the amount of data available for transmission at the UE.

After receiving the UL-SCH data, the BS transmits a contention resolution message (Msg4) to the UE as in step 4. When the UE receives the contention resolution message and succeeds in contention resolution, the TC-RNTI is changed to a C-RNTI. Msg4 may include the ID of the UE and/or RRC connection-related information (e.g., an RRCSetup message). When information transmitted in Msg3 does not match information received in Msg4, or when the UE has not received Msg4 for a predetermined time, the UE may retransmit Msg3, determining that the contention resolution has failed.

Referring to FIG. 8(b), the dedicated random access procedure includes the following three steps. Messages transmitted in steps 0 to 2 may be referred to as Msg0 to Msg2, respectively. The BS may trigger the dedicated random access procedure by a PDCCH serving the purpose of commanding RACH preamble transmission (hereinafter, referred to as a PDCCH order).
- Step 0: The BS allocates an RACH preamble to the UE by dedicated signaling.
- Step 1: The UE transmits the RACH preamble on a PRACH.
- Step 2: The UE receives an RAR on a DL-SCH from the BS.

Steps 1 and 2 of the dedicated random access procedure may be the same as steps 1 and 2 of the contention-based random access procedure.

In NR, DCI format 1_0 is used to initiate a non-contention-based random access procedure by a PDCCH order. DCI format 1_0 is used to schedule a PDSCH in one DL cell. When the CRC of DCI format 1_0 is scrambled with a C-RNTI, and all bits of a "Frequency domain resource assignment" field are 1s, DCI format 1_0 is used as a PDCCH order indicating a random access procedure. In this case, the fields of DCI format 1_0 are configured as follows.
- RA preamble index: 6 bits
- UL/supplementary UL (SUL) indicator: 1 bit. When the bits of the RA preamble index are all non-zeroes and SUL is configured for the UE in the cell, the UL/SUL indicator indicates a UL carrier in which a PRACH is transmitted in the cell. Otherwise, it is reserved.
- SSB (Synchronization Signal/Physical Broadcast Channel) index: 6 bits. When the bits of the RA preamble index are all non-zeroes, the SSB indicator indicates an SSB used to determine an RACH occasion for PRACH transmission. Otherwise, it is reserved.
- PRACH mask index: 4 bits. When the bits of the RA preamble index are all non-zeroes, the PRACH mask index indicates an RACH occasion associated with the SSB indicated by the SSB index. Otherwise, it is reserved.
- Reserved: 10 bits

When DCI format 1_0 does not correspond to a PDCCH order, DCI format 1_0 includes fields used to schedule a PDSCH (e.g., a time domain resource assignment, a modulation and coding scheme (MCS), an HARQ process number, a PDSCH-to-HARQ_feedback timing indicator, and so on).

### 2-step random access procedure

In the prior art, random access is performed by a 4-step procedure as described above. In the legacy LTE system, an average of 15.5 ms is required for the 4-step random access procedure.

**[Table 5]**

| ▪ Component | Description | Time (ms) |
|---|---|---|
| ▪ 1 | Average delay due to RACH scheduling period (1ms RACH cycle) | 0.5 |
| ▪ 2 | RACH Preamble | 1 |
| ▪ 3-4 | Preamble detection and transmission of RA response (Time between the end RACH transmission and UE's reception of scheduling grant and timing adjustment) | 3 |
| ▪ 5 | UE Processing Delay (decoding of scheduling grant, timing alignment and C-RNTI assignment + L1 encoding of RRC Connection Request) | 5 |
| ▪ 6 | Transmission of RRC and NAS Request | 1 |
| ▪ 7 | Processing delay in eNB (L2 and RRC) | 4 |
| ▪ 8 | Transmission of RRC Connection Set-up (and UL grant) | 1 |

The NR system may require lower latency than conventional systems. When random access occurs in a U-band, the random access may be terminated, that is, contention may be resolved only if the UE and BS sequentially succeed in LBT in all steps of the 4-step random access procedure. If the LBT fails even in one step of the 4-step random access procedure, resource efficiency may decrease, and latency may increase. If the LBT fails in a scheduling/transmission process associated with Msg2 or Msg3, the resource efficiency may significantly decrease, and the latency may significantly increase. For random access in an L-band, low latency may be required in various scenarios of the NR system. Therefore, a 2-step random access procedure may be performed in the L-band as well.

To reduce latency in the random access procedure, the present disclosure proposes a 2-step random access procedure.

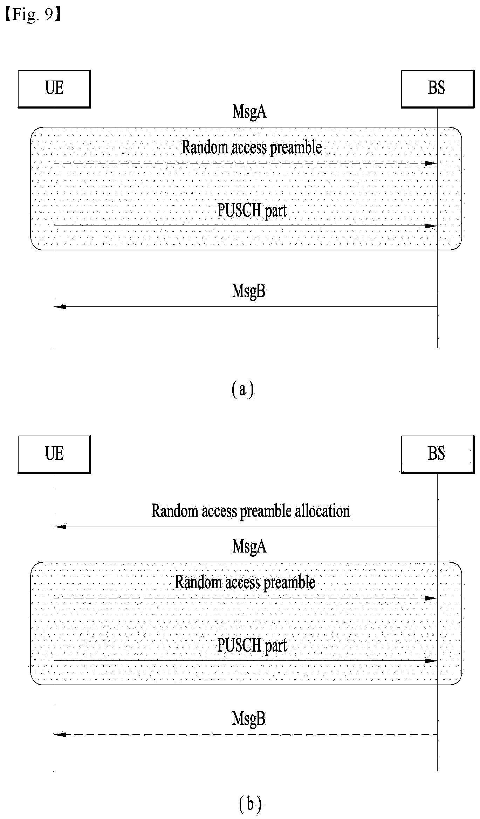

As illustrated in FIG. 9(a), the 2-step random access procedure may include two steps: transmission of a UL signal (referred to as MsgA) from the UE to the BS and transmission of a DL signal (referred to as MsgB) from the BS to the UE.

The following description focuses on the initial access procedure, but the proposed methods may be equally applied to the random access procedure after the UE and BS establish an RRC connection. Further, a random access preamble and a PUSCH part may be transmitted together in a non-contention random access procedure as shown in FIG. 9(b).

While not shown, the BS may transmit a PDCCH for scheduling Msg. B to the UE, which may be referred to as a Msg. B PDCCH.

### RB Interlace

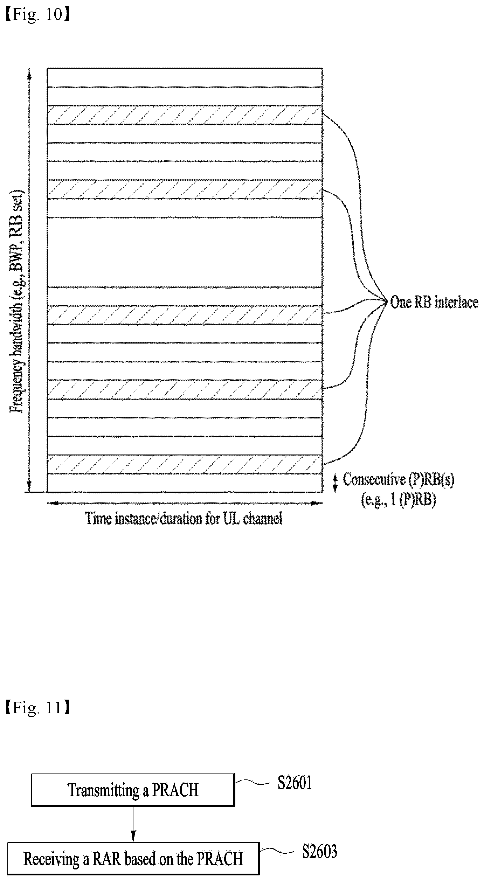

FIG. 10 illustrates an RB interlace. In a shared spectrum, a set of inconsecutive RBs (at the regular interval) (or a single RB) in the frequency domain may be defined as a resource unit used/allocated to transmit a UL (physical) channel/signal in consideration of regulations on occupied channel bandwidth (OCB) and power spectral density (PSD). Such a set of inconsecutive RBs is defined as the RB interlace (or interlace) for convenience.

Referring to FIG. 10, a plurality of RB interlaces (interlaces) may be defined in a frequency bandwidth. Here, the frequency bandwidth may include a (wideband) cell/CC/BWP/RB set, and the RB may include a PRB. For example, interlace #m∈{0, 1, ..., M-1} may consist of (common) RBs {m, M+m, 2M+m, 3M+m, ...}, where M represents the number of interlaces. A transmitter (e.g., UE) may use one or more interlaces to transmit a signal/channel. The signal/channel may include a PUCCH or PUSCH.

The signal/channel may include a PUCCH, a PUSCH, and/or a PRACH.

### 3. PRACH Transmission in High Frequency Band

The above description (an NR frame structure, an RACH, a U-band system, etc.) may be applied in combination with methods proposed in the present disclosure, which will be described later, or may be supplemented to clarify the technical features of the methods proposed in the present disclosure.

In addition, the methods to be described later are related to UL transmission and may be equally applied even to a UL signal transmission method in the NR system (L-band) and the U-band system (U-band) described earlier. It is apparent that modifications or replacements may be made to be suitable for terms, expressions, structures, etc. defined in each system so that the technical idea proposed in the present disclosure may be implemented in a corresponding system.

For example, DL transmission through the methods to be described later may be performed in an L-cell and/or a U-cell defined in the U-band system.

In a cellular communication system such as an LTE/NR system, a method of utilizing, for traffic offloading, U-bands, such as 5/6 GHz and 60 GHz bands, as well as a U-band, such as a 2.4 GHz band, which is used mainly by a legacy Wi-Fi system, is under consideration.

As described above, the Wi-Fi standard (802.11ac) specifies a CCA threshold of -62 dBm for non-Wi-Fi signals and a CCA threshold of -82 dBm for Wi-Fi signals. In other words, when a signal of a device of a non-Wi-Fi system is received with a power of -62 dBm or more in a specific band, a station (STA) or an access point (AP) of a Wi-Fi system does not perform signal transmission in the specific band.

In the present disclosure, the term "unlicensed band (U-band)" may be replaced and interchangeably used with "shared spectrum".

In the NR system, various numerologies or SCSs are supported to support various services. For example, when an SCS is 15 kHz, the NR system supports a wide area in traditional cellular bands. When an SCS is 30 kHz/60 kHz, the NR system supports a dense urban area, a lower latency, and a wide carrier bandwidth (BW). When an SCS is 60 kHz or higher, the NR system supports a BW larger than 24.25 GHz to overcome phase noise.

An NR frequency band is defined as two types of frequency ranges, FR1 and FR2. FR1 and FR2 may be configured as in Table 6. FR2 may represent millimeter wave (mmW).

**[Table 6]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

A band (e.g., 52.6 GHz to 114.25 GHz bands, especially 71 GHz) higher than FR1 and FR2 bands is referred to as FR4.

The FR4 band may be used as a U-band.

Regarding regulations on U-bands, there is a PSD limit when a certain node transmits signals. For example, in some bands of the FR4 region, a signal satisfying a PSD of 23 dBm/1 MHz should be transmitted. In other bands, a signal satisfying a PSD of 13 dBm/1 MHz should be transmitted. In this situation, the UE needs to increase allowable transmit power by distributively transmitting signals/channels on the frequency axis.

As other regulations on the U-bands, there is an OCB limit when a node transmits signals. For example, when a node transmits signals, there is a restriction that 70% of a defined system BW should be occupied. If the system BW is 400 MHz, a node that tries to transmit signals should occupy more than 280 MHz, which is 70% of 400 MHz.

As one method for satisfying the above-mentioned restrictions, a method of increasing the length of a Zadoff-Chu (ZC) sequence to be used as a PRACH preamble may be considered. Table 7 shows the total number of PRBs for each SCS and BW defined in the FR2 region.

**[Table 7]**

| **SCS (kHz)** | **50 MHz** | **100 MHz** | **200 MHz** | **400 MHz** |
|---|---|---|---|---|
| | **N_{RB}** | **N_{RB}** | **N_{RB}** | **N_{RB}** |
| 60 | 66 | 132 | 264 | N.A |
| 120 | 32 | 66 | 132 | 264 |

Table 8 shows the expected total number of PRBs based on Table 7 when an SCS increases up to 240 kHz, 480 kHz, and 960 kHz and when BW increases up to 800 MHz, 1600 MHz, and 2000 MHz.

**[Table 8]**

| **SCS (kHz)** | **50 MHz** | **100 MHz** | **200 MHz** | **400 MHz** | **800 MHz** | **1600 MHz** | **2000 MHz** |
|---|---|---|---|---|---|---|---|
| | **N_{RB}** | **N_{RB}** | **N_{RB}** | **N_{RB}** | **N_{RB}** | **N_{RB}** | **N_{RB}** |
| 60 | 66 | 132 | 264 | N.A | N.A | N.A | N.A |
| 120 | 32 | 66 | 132 | 264 | N.A | N.A | N.A |
| 240 | 16 | 32 | 66 | 132 | 264 | N.A | N.A |
| 480 | 8 | 16 | 32 | 66 | 132 | 264 | N.A |
| 960 | 4 | 8 | 16 | 32 | 66 | 132 | 160 |

Additionally, the number of PRBs determined for simulation is shown in Table 9.

**[Table 9]**

| **SCS (kHz)** | **50 MHz** | **100 MHz** | **200 MHz** | **400 MHz** | **800 MHz** | **1600 MHz** | **2000 MHz** |
|---|---|---|---|---|---|---|---|
| | **N_{RB}** | **N_{RB}** | **N_{RB}** | **N_{RB}** | **N_{RB}** | **N_{RB}** | **N_{RB}** |
| 120 | 32 | 64 | 128 | 256 | N.A | N.A | N.A |
| 240 | 16 | 32 | 64 | 128 | 256 | N.A | N.A |
| 480 | 8 | 16 | 32 | 64 | 128 | 256 | N.A |
| 960 | 4 | 8 | 16 | 32 | 64 | 128 | 160 |

If the number of PRBs for each SCS and each BW is defined as in Table 8 and/or Table 9, a ZC sequence introduced in legacy NR and NR-U may not be used without change. Therefore, the sequence introduced in legacy NR and NR-U needs to be repeated in the frequency domain, or a sequence of a new length needs to be introduced.

Meanwhile, although the final number of PRBs for each SCS and each BW may be different from that of Table 8 and/or Table 9, methods proposed below may be extended and applied based on the determined final number of PRBs.

A value that greatly affects the introduction of the structure of new PRACH preambles is a unit BW (i.e., nominal BW) performing LBT. For example, if the nominal BW is 200 MHz, a ZC sequence of a new length may be selected or an existing sequence may be repeatedly transmitted in the frequency domain, so that more than 140 MHz may be occupied to satisfy an OCB requirement of 70% of 200 MHz. In the present disclosure, the nominal BW may be replaced with and/or represented as a carrier BW or an initial active UL BWP BW.

As candidates that may be the nominal BW, {200 MHz, 400 MHz, 800 MHz, 1600 MHz, 2000 MHz} may typically be considered according to SCS values (e.g., 120 kHz, 240 kHz, 480 kHz, and 960 kHz) considered to be used in FR4. Therefore, when the BS indicates the nominal BW and/or the SCS value for PRACH transmission or when the nominal BW and/or the SCS value are predetermined between the UE and the BS, the following methods may be proposed to design a PRACH structure in an FR4 region.

The following proposed methods may also be used for a reduced capability (RedCap) system. A RedCap UE is a UE having lower cost and lower complexity than a legacy NR UE. For example, the RedCap UE may be operated with a BWP of 5 MHz set in a frequency band of 5/6 GHz. In addition, RedCap may include technical ideas corresponding to a legacy NR-light (or NR-lite) system.

[Proposed Method 1: Selecting a ZC sequence of a new length that may use (almost) all PRBs constituting the nominal BW as one RO]

As mentioned above, if the nominal BW value and the SCS value are determined, the number of PRBs constituting the nominal BW may be determined as shown in Table 8 or Table 9. The first proposed method is a method of selecting a ZC sequence of a new length by considering the number of PRBs constituting the nominal BW as the number of PRBs occupied by one RO in which a PRACH preamble is to be transmitted.

Table 10 shows a ZC sequence length selected based on the number of PRBs constituting the nominal BW. The number of PRBs constituting the nominal BW may be configured according to Table 9. Since one RO in which the PRACH preamble is to be transmitted occupies (almost) all of the number of PRBs constituting the nominal BW, the OCB requirement may be easily satisfied.

Characteristically, a ZC sequence length selection method includes calculating the number of subcarriers (i.e., the number of tones) constituting one RO and selecting the largest prime number that is less than or equal to the calculated number of subcarriers, which is desirable upon considering various system designs such as sequence detection performance and PRACH capacity. In this case, as a method of designing a logical root index order and/or a cyclic shift (CS) duration, the same method as in legacy LTE, NR, or NR-U may be used.

**[Table 10]**

| **# of PRBs in nominal BW (= single RO)** | **# of sub-carriers in nominal BW** | **ZC sequence length** | OCB % |
|---|---|---|---|
| 256 | (256*12=) 3072 | 3067 | 92.01 |
| 160 | (160*12=) 1920 | 1913 | 91.82 |
| 128 | (128*12=) 1536 | 1531 | 91.86 |
| 64 | (64*12=) 768 | 761 | 91.32 |
| 32 | (32*12=) 384 | 383 | 91.92 |
| 16 | (16*12=) 192 | 191 | 91.68 |

As an example of Table 10, if the nominal BW is 400 MHz and the SCS for PRACH transmission is 120 kHz, the number of PRBs constituting the nominal BW becomes 256. Accordingly, in this case, a ZC sequence having a length of 3067 may be used for PRACH preamble transmission. The ZC sequence of a length of 3067 may be represented as an L3067 ZC sequence. As another example, if the nominal BW is 800 MHz and the SCS for PRACH transmission is 240 kHz, the number of PRBs constituting the nominal BW becomes 256. Therefore, even in this case, the L3067 ZC sequence may be used for PRACH preamble transmission.

As an example having another sequence length, when the nominal BW is 800 MHz and the SCS for PRACH transmission is 960 kHz, the number of PRBs constituting the nominal BW becomes 64. Therefore, in this case, an L761 ZC sequence may be used for PRACH preamble transmission. As another example, when the nominal BW is 2000 MHz and the SCS for PRACH transmission is 960 kHz, the number of PRBs constituting the nominal BW becomes 160. Therefore, in this case, an L1913 ZC sequence may be used for PRACH preamble transmission.

Characteristically, when the nominal BW is 2000 MHz and the SCS for PRACH transmission is 960 kHz, the OCB requirement may be satisfied even if an L1531 ZC sequence is used instead of the L1913 ZC sequence (because a channel occupancy rate is 73.48%). Accordingly, in this situation, if the L1531 ZC sequence is used instead of the L1913 ZC sequence, the number of PRBs constituting one RO may be defined as 128 instead of 160.

In other words, among prime numbers less than or equal to the number of subcarriers constituting the nominal BW, one of prime numbers satisfying the OCB requirement may be selected as a number corresponding to the ZC sequence length of one RO.

[Proposed Method 2: Method of repeatedly transmitting a ZC sequence of a new length in the frequency domain]

The ZC sequence of the new length defined in Proposed Method 1 above may be repeatedly transmitted in the frequency domain. The repeatedly transmitted ZC sequence may be one of the ZC sequences defined in Proposed Method 1. For example, the repeatedly transmitted ZC sequence may be determined based on a minimum value of the number of PRBs selected for each nominal BW in the FR4 region.

As an example, as shown in Table 11, when the number of PRBs constituting the nominal BW is considered to be 32 or more, that is, when a minimum value of the number of PRBs of the nominal BW in the FR4 region is 32, an L383 ZC sequence may be selected, and a PRACH structure may be configured such that the selected sequence is repeatedly transmitted in the frequency domain from a minimum of one time to a maximum of 8 times.

**[Table 11]**

| **# of PRBs in nominal BW** | **# of sub-carriers in nominal BW** | **ZC sequence length** | **# of Repetition** | **OCB %** |
|---|---|---|---|---|
| 256 | (256*12 =) 3072 | 383 | 8 (383*8 = 3064) | 91.92 |
| 160 | (160*12=) 1920 | 383 | 4 (383*4 = 1532) | 73.54 |
| 128 | (128*12=) 1536 | 383 | 4 (383*4 = 1532) | 91.92 |
| 64 | (64*12=) 768 | 383 | 2 (383*2 = 766) | 91.92 |
| 32 | (32*12=) 384 | 383 | 1 (383*1 = 383) | 91.92 |

As another example, as shown in Table 12, when the number of PRBs constituting the nominal BW is considered to be 64 or more, that is, when the minimum value of the number of PRBs of the nominal BW in the FR4 region is 64, an L761 ZC sequence may be selected, and the PRACH structure may be configured such that the selected sequence is repeatedly transmitted in the frequency domain from a minimum of one time to a maximum of 4 times.

**[Table 12]**

| **# of PRBs in nominal BW** | **# of sub-carriers in nominal BW** | **ZC sequence length** | **# of Repetition** | **OCB %** |
|---|---|---|---|---|
| 256 | (256*12=) 3072 | 761 | 4 (761*4 = 3044) | 91.32 |
| 160 | (160*12=) 1920 | 761 | 2 (761*2 = 1522) | 73.06 |
| 128 | (128*12=) 1536 | 761 | 2 (761*2 = 1522) | 91.32 |
| 64 | (64*12=) 768 | 761 | 1 (761*1 = 761) | 91.32 |

Thus, when the same sequence is repeatedly transmitted in the frequency domain, peak-to-average power ratio (PAPR)/cubic metric (CM) performance may deteriorate. In order to prevent PAPR/CM performance from being degraded, CS and/or phase shift (PS) having a specific rule may be additionally applied to repeated ZC sequences.

In addition, when repetitive transmission of a sequence in the frequency domain is considered, since the OCB requirement to be considered is 70% or more. Accordingly, the number of repetitive transmissions when the number of PRBs constituting the nominal BW is 160 (i.e., in the case of an SCS of 960 kHz and a nominal BW of 2000) may be set to be the same as the number of repetitive transmissions when the number of PRBs constituting the nominal BW is 128.

### [Proposed Method 3: Method of operating an RACH procedure always within the channel occupancy of the BS]

Proposed Methods 1 and 2 are methods in which the UE should always determine whether a channel is idle before transmitting a PRACH preamble. The claimed Proposed Method 3 is a method in which the BS occupies a channel before the RACH procedure of the UE starts and informs the UE of the channel so that the UE transmits the PRACH preamble within a channel occupancy (CO) of the BS. In this case, since the channel for the UE to transmit the PRACH preamble has already been occupied by the BS, an exception to the OCB requirement may be applied. Therefore, the UE may use a ZC sequence defined in the legacy NR or NR-U system for the PRACH preamble.

Additionally, when the nominal BW is greater than a supportable maximum BW according to a specific SCS, the new ZC sequence defined in Proposed Method 1 and/or a conventional ZC sequence may be transmitted without repetition in the frequency domain.

For example, when the new ZC sequence length is selected based on a maximum BW of 400 MHz in an SCS of 120 kHz, the L3067 ZC sequence may be selected as shown in Table 10 of Proposed Method 1. In this case, the case in which the nominal BW is set to be greater than 400 MHZ (e.g., 2000 MHz) may be considered. The BS may inform the UE of a CO secured by the BS before the RACH procedure of the UE starts, and the UE may transmit the L3067 ZC sequence in an RACH slot existing within a corresponding CO without repetition in the frequency domain. If the BS fails to secure the CO for the UE, the UE may not start the RACH procedure.

Additionally, since an idle-mode UE that is to perform initial access needs to determine the CO secured by the BS before starting the RACH procedure, group common DCI through which CO information is transmitted should be defined so as to be detected by the idle-mode UE. To this end, the BS may inform the UE of a radio network temporary identifier (RNTI) value (e.g., slot format indication (SFI)-RNTI) to be used for the group common DCI through an SIB. In addition, it is necessary for the UE to be aware of search space information through which the corresponding DCI is to be transmitted. For example, the group common DCI may be transmitted in CORESET#0.

On the other hand, when a ChannelAccessMode-r16 RRC parameter is dynamically configured, that is, when the ChannelAccessMode-r16 RRC parameter is an load-based equipment (LBE) rather than a frame-based equipment (FBE), if a PRACH BW is smaller than the nominal BW (or if the PRACH BW is smaller than 70% of the nominal BW), the UE may not be allowed to perform a Type 1 channel access method (i.e., cat-4 LBT based on random backoff) before PRACH transmission.

Characteristically, the UE is configured to perform cat-2 LBT before PRACH transmission, only upon receiving a DL signal and/or channel transmitted from a serving cell, prior to X ms before PRACH preamble transmission. Cat-2 LBT may correspond to a Type 2 UL CAP method described above. Since the UE has conventionally performed Type 1 UL CAP before transmitting the PRACH preamble, a time required for a CAP of the UE may be reduced according to the proposed method. The DL signal and/or channel may be, for example, an SSB, an SIB1 PDCCH, and/or an SIB1 PDSCH. System information block type 1 (SIB1) includes information related to availability and scheduling (e.g., transmission periodicity or SI-window size) of the remaining SIBs (hereinafter, SIBx, where x is an integer greater than or equal to 2). For example, SIB 1 may indicate whether SIBx is periodically broadcast or is provided at the request of the UE by an on-demand method. When SIBx is provided by the on-demand method, SIB1 may include information necessary for the UE to perform an SI request. A PDCCH that schedules SIB1 is transmitted through a Type0-PDCCH common search space, and SIB1 is transmitted through a PDSCH indicated by the PDCCH. The PDCCH that schedules SIB1 is referred to as an SIB1 PDCCH, and a PDSCH that includes SIB1 is referred to as SIB1 PDSCH.

The BS is configured to transmit a DL signal and/or channel only when a minimum COT is secured. The minimum COT may correspond to, for example, X ms + RACH slot duration. The value of X may be predefined (e.g., X=2) or may be a set value. X may be referred to as a threshold time value. That is, when X=2 is given, if the DL signal/channel transmitted from the serving cell is found for 2 ms before the PRACH preamble, an initial access UE (or idle-mode UE) may perform cat-2 LBT. When LBT is successful, the UE may attempt to transmit the corresponding PRACH preamble. When X=2 is given, if the DL signal and/or channel transmitted from the serving cell is not found for 2 ms before the PRACH preamble, the initial access UE (or idle mode UE) may not be allowed to transmit the corresponding PRACH preamble. Even if the minimum COT is secured by the BS, since contention-based random access procedures may be performed by a plurality of UEs, it may be advantageous in terms of system stability to perform a Type 2 UL CAP rather than omitting the UL CAP.

Since each of the examples of the proposed methods may be included as one method for implementing the present disclosure, it is apparent that each example may be regarded as a proposed method. Although the proposed methods may be implemented independently, some of the proposed methods may be combined (or merged) for implementation. In addition, it may be regulated that information on whether the proposed methods are applied (or information on rules related to the proposed methods) should be transmitted from a BS to a UE through a predefined signal (e.g., a physical layer signal, a higher layer signal, etc.). A higher layer may include one or more of functional layers, such as MAC, RLC, PDCP, RRC, and SDAP.

### Implementation Example

One or more of the operations described hereinabove may be organically combined to implement embodiments.

One of embodiments that may be implemented by a combination of the above-described operations may be as illustrated in FIG. 11.

The UE may transmit a PRACH (S2601) and receive an RAR corresponding to the PRACH (S2603). Although not shown, the BS may receive the PRACH and transmit the RAR corresponding to the PRACH.

In this case, the PRACH may be configured with the structure proposed in Proposed Method 1 and/or Proposed Method 2 proposed in the present disclosure. For example, the PRACH may be generated based on a ZC sequence of a length selected according to Proposed Method 1 and may be transmitted in one RO. Alternatively, the PRACH may be configured such that a specific ZC sequence is repeatedly transmitted according to Proposed Method 2.

According to Proposed Method 3, the PRACH may always be transmitted within a channel occupancy time (COT) of the BS. For example, the UE may perform a Type 2 UL CAP (or cat-2 LBT) based on reception of a DL signal and transmit the PRACH based on a result of performing the Type 2 UL CAP. The DL signal may be transmitted by the BS based on securement of a minimum COT. The DL signal may include, for example, one or more of an SSB, an SIB1 PDCCH, and/or an SIB1 PDSCH. The minimum COT may be set to a time obtained by adding an RACH slot duration to a preset threshold time value X.

According to Proposed Method 3, the UE may perform the Type 2 UL CAP based on reception of the DL signal during the threshold time value X before a transmission scheduled time point of the PRACH. In addition, the UE may drop PRACH transmission based on non-reception of the DL signal during the threshold time value X before the transmission time point of the PRACH. In other words, the UE may perform the Type 2 UL CAP for PRACH transmission based on reception of the DL signal within a time duration from a first time point (transmission scheduled time point of the PRACH - threshold time value) to a second time point (transmission scheduled time point of the PRACH). The UE may drop PRACH transmission based on non-reception of the DL signal within the time duration from the first time point to the second time point.

In addition to the operation of FIG. 11 described above, one or more of the operations described with reference to FIGS. 1 to 10 and/or the operations described in Section 3 may be additionally performed in combination.

### Example of communication system to which the present disclosure is applied

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

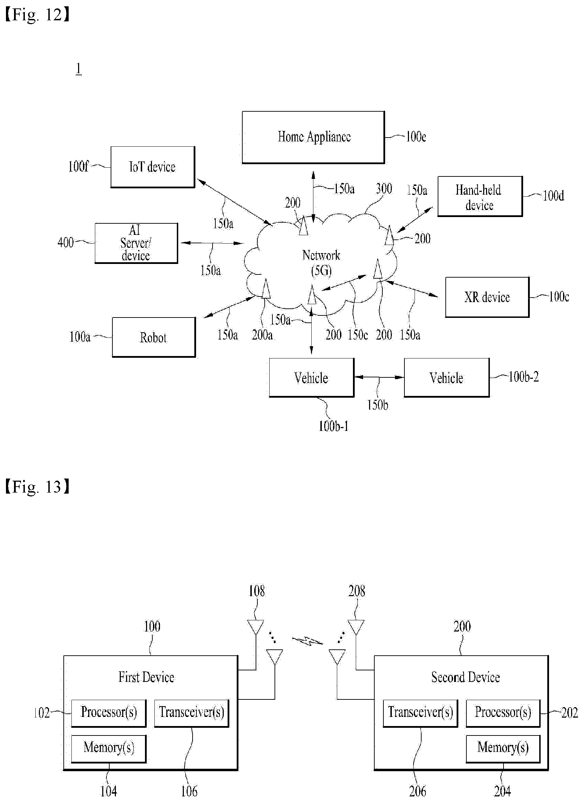

FIG. 12 illustrates a communication system 1 applied to the present disclosure.

Referring to FIG. 12, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smart pad, a wearable device (e.g., a smart watch or smart glasses), and a computer (e.g., a laptop). The home appliance may include a TV, a refrigerator, a washing machine, and so on. The IoT device may include a sensor, a smart meter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g., V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100f/BS 200 and between the BSs 200. Herein, the wireless communication/connections may be established through various RATs (e.g., 5G NR) such as UL/DL communication 150a, sidelink communication 150b (or, D2D communication), or inter-BS communication (e.g., relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

### Example of wireless device to which the present disclosure is applied

FIG. 13 illustrates wireless devices applicable to the present disclosure.

Referring to FIG. 13, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 12.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

### Example of use of wireless device to which the present disclosure is applied

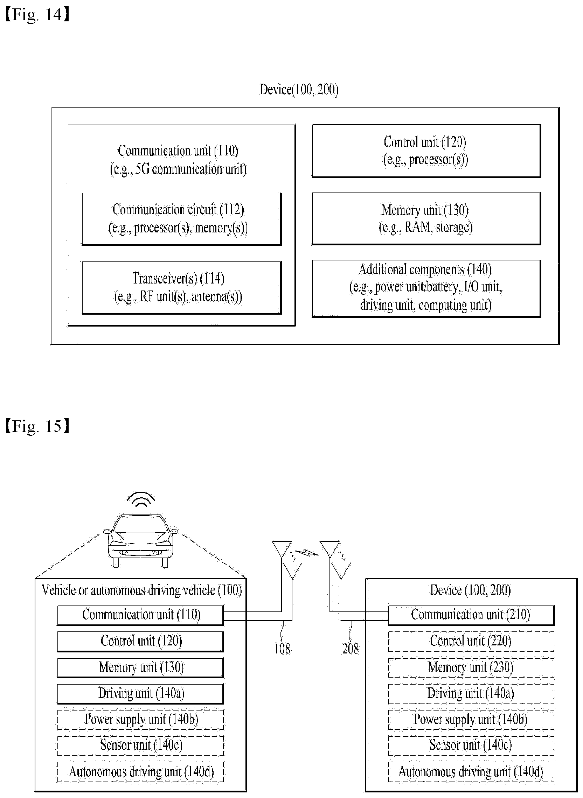

FIG. 14 illustrates another example of a wireless device applied to the present disclosure. The wireless device may be implemented in various forms according to a use case/service (refer to FIG. 12).

Referring to FIG. 14, wireless devices 100 and 200 may correspond to the wireless devices 100 and 200 of FIG. 13 and may be configured to include various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 and/or the one or more memories 104 and 204 of FIG. 13. For example, the transceiver(s) 114 may include the one or more transceivers 106 and 206 and/or the one or more antennas 108 and 208 of FIG. 13. The control unit 120 is electrically connected to the communication unit 110, the memory 130, and the additional components 140 and provides overall control to the wireless device. For example, the control unit 120 may control an electric/mechanical operation of the wireless device based on programs/code/instructions/information stored in the memory unit 130. The control unit 120 may transmit the information stored in the memory unit 130 to the outside (e.g., other communication devices) via the communication unit 110 through a wireless/wired interface or store, in the memory unit 130, information received through the wireless/wired interface from the outside (e.g., other communication devices) via the communication unit 110.

The additional components 140 may be configured in various manners according to type of the wireless device. For example, the additional components 140 may include at least one of a power unit/battery, input/output (I/O) unit, a driving unit, and a computing unit. The wireless device may be implemented in the form of, not limited to, the robot (100a of FIG. 19), the vehicles (100b-1 and 100b-2 of FIG. 12), the XR device (100c of FIG. 12), the hand-held device (100d of FIG. 12), the home appliance (100e of FIG. 12), the IoT device (100f of FIG. 12), a digital broadcasting terminal, a hologram device, a public safety device, an MTC device, a medical device, a FinTech device (or a finance device), a security device, a climate/environment device, the AI server/device (400 of FIG. 12), the BSs (200 of FIG. 12), a network node, or the like. The wireless device may be mobile or fixed according to a use case/service.

In FIG. 14, all of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module in the wireless devices 100 and 200 may further include one or more elements. For example, the control unit 120 may be configured with a set of one or more processors. For example, the control unit 120 may be configured with a set of a communication control processor, an application processor, an electronic control unit (ECU), a graphical processing unit, and a memory control processor. In another example, the memory 130 may be configured with a RAM, a dynamic RAM (DRAM), a ROM, a flash memory, a volatile memory, a non-volatile memory, and/or a combination thereof.

### Example of vehicle or autonomous driving vehicle to which the present disclosure is applied

FIG. 15 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 15, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 14, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

Those skilled in the art will appreciate that the present disclosure may be carried out in other specific ways than those set forth herein without departing from the essential characteristics of the present disclosure. The above embodiments are therefore to be construed in all aspects as illustrative and not restrictive. The scope of the disclosure should be determined by the appended claims.

### Industrial Applicability

As described above, the present disclosure is applicable to various wireless communication systems.

## Claims

1. A method of transmitting and receiving a signal by a user equipment, UE, in a wireless communication system, the method comprising:
transmitting (S2601) a physical random access channel, PRACH; and
receiving (S2603) a random access response, RAR, based on the PRACH,
**characterized by** the PRACH being transmitted after a Type 2 uplink channel access procedure, CAP, is performed based on (i) a channel access mode being a load based equipment, LBE, mode, (ii) a bandwidth, BW, for the PRACH being smaller than a nominal BW, and (iii) reception of a downlink signal within a threshold time value.

2. The method of claim 1, wherein the downlink signal is a synchronization signal/physical broadcast channel block, SSB, a system information block type 1, SIB1, physical downlink control channel, PDCCH, and/or an SIB1 physical downlink shared channel, PDSCH.

3. The method of claim 1,
wherein the downlink signal is transmitted based on securement of a minimum channel occupancy time, COT, and
wherein the minimum COT is a value obtained by adding a random access channel, RACH, slot duration to the threshold time value.

4. The method of claim 3,
wherein the threshold time value is a time duration from a first time point to a second time point,
wherein the first time point is a time point earlier than a transmission scheduled time point of the PRACH by the threshold time value, and
wherein the second time point is the transmission scheduled time point of the PRACH.

5. The method of claim 1,
wherein the PRACH is dropped without both of a Type 1 CAP and the Type 2 CAP based on (i) the channel access mode being the LBE mode, (ii) the BW for the PRACH being smaller than the nominal BW, and (iii) non-reception of the downlink signal within the threshold time value.

6. An apparatus (100) for a user equipment, UE, the apparatus (100) comprising:
at least one processor (102); and
at least one computer memory (104) operably connectable to the at least one processor (102) and configured to cause, when executed, the at least one processor (102) to perform operations,
wherein the operations comprise:
transmitting (S2601) a physical random access channel, PRACH; and
receiving (S2603) a random access response, RAR, based on the PRACH, and
**characterized by** the PRACH being transmitted after a Type 2 uplink channel access procedure, CAP, is performed based on (i) a channel access mode being a load based equipment, LBE, mode, (ii) a bandwidth, BW, for the PRACH being smaller than a nominal BW, and (iii) reception of a downlink signal within a threshold time value.

7. The apparatus (100) of claim 6, wherein the downlink signal is a synchronization signal/physical broadcast channel block, SSB, a system information block type 1, SIB1, physical downlink control channel, PDCCH, and/or an SIB1 physical downlink shared channel, PDSCH.

8. The apparatus (100) of claim 6,
wherein the downlink signal is transmitted based on securement of a minimum channel occupancy time, COT, and
wherein the minimum COT is a value obtained by adding a random access channel, RACH, slot duration to the threshold time value.

9. The apparatus (100) of claim 8,
wherein the threshold time value is a time duration from a first time point to a second time point,
wherein the first time point is a time point earlier than a transmission scheduled time point of the PRACH by the threshold time value, and
wherein the second time point is the transmission scheduled time point of the PRACH.

10. The apparatus (100) of claim 6,
wherein the PRACH is dropped without both of a Type 1 CAP and the Type 2 CAP based on (i) the channel access mode being the LBE mode, (ii) the BW for the PRACH being smaller than the nominal BW, and (iii) non-reception of the downlink signal within the threshold time value.

11. The apparatus (100) of claim 6, further comprising:
at least one transceiver (106).

12. A computer-readable storage medium including at least one computer program that causes at least one processor (102) to perform operations,
wherein the operations comprise:
transmitting (S2601) a physical random access channel, PRACH,; and
receiving (S2603) a random access response, RAR, based on the PRACH, and
**characterized by** the PRACH being transmitted after a Type 2 uplink channel access procedure, CAP, is performed based on (i) a channel access mode being a load based equipment, LBE, mode, (ii) a bandwidth (BW) for the PRACH being smaller than a nominal BW, and (iii) reception of a downlink signal within a threshold time value.

## Patentansprüche

1. Verfahren zum Senden und Empfangen eines Signals durch ein Benutzergerät, UE, in einem drahtlosen Kommunikationssystem, wobei das Verfahren umfasst:
Senden (S2601) eines physikalischen Zufallszugriffskanals, PRACH; und
Empfangen (S2603) einer Zufallszugriffsantwort, RAR, auf der Grundlage des PRACH,
**dadurch gekennzeichnet, dass** der PRACH gesendet wird, nachdem ein Uplink-Kanalzugriffsverfahren, CAP, vom Typ 2 durchgeführt wurde, basierend auf (i) einem Kanalzugriffsmodus, bei dem es sich um einen lastbasierten Geräte, LBE, -Modus handelt, (ii) einer Bandbreite, BW, für den PRACH, die kleiner ist als eine nominale BW, und (iii) einem Empfang eines Downlink-Signals innerhalb eines Schwellenzeitwerts.

2. Verfahren nach Anspruch 1, wobei das Downlink-Signal ein Synchronisationssignal/physikalischer Rundfunkkanalblock, SSB, ein Systeminformationsblock Typ 1, SIB1, ein physikalischer Downlink-Steuerkanal, PDCCH, und/oder ein physikalischer Downlink-Shared-Kanal vom Typ SIB1, PDSCH, ist.

3. Verfahren nach Anspruch 1,
wobei das Downlink-Signal auf der Grundlage einer Sicherstellung einer minimalen Kanalbelegungszeit, COT, gesendet wird und
wobei die minimale COT ein Wert ist, der durch Addition einer Slot-Dauer eines Zufallszugriffskanals, RACH, zum Schwellenzeitwert erhalten wird.

4. Verfahren nach Anspruch 3,
wobei der Schwellenzeitwert eine Zeitdauer von einem ersten Zeitpunkt bis zu einem zweiten Zeitpunkt ist,
wobei der erste Zeitpunkt ein Zeitpunkt ist, der um den Schwellenzeitwert vor dem für die Übertragung des PRACH geplanten Zeitpunkt liegt, und
wobei der zweite Zeitpunkt der geplante Übertragungszeitpunkt des PRACH ist.

5. Verfahren nach Anspruch 1,
wobei der PRACH ohne sowohl einen Typ-1-CAP als auch einen Typ-2-CAP verworfen wird, basierend auf (i) dem Kanalzugriffsmodus, der der LBE-Modus ist, (ii) der BW für den PRACH, die kleiner als die nominale BW ist, und (iii) dem Nichtempfang des Downlink-Signals innerhalb des Schwellenzeitwerts.

6. Vorrichtung (100) für ein Benutzergerät, UE, wobei die Vorrichtung (100) umfasst:
mindestens einen Prozessor (102); und
mindestens einen Computerspeicher (104), der betriebsfähig mit dem mindestens einen Prozessor (102) verbunden und so konfiguriert ist, dass er bei Ausführung den mindestens einen Prozessor (102) dazu veranlasst, Operationen auszuführen,
wobei die Operationen umfassen:
Senden (S2601) eines physikalischen Direktzugriffskanals, PRACH; und
Empfangen (S2603) einer Direktzugriffsantwort, RAR, auf der Grundlage des PRACH, und
**dadurch gekennzeichnet, dass** der PRACH nach Durchführung eines Typ-2-Uplink-Kanalzugriffsverfahrens, CAP, übertragen wird, basierend auf (i) einem Kanalzugriffsmodus, bei dem es sich um einen lastbasierten Geräte, LBE, -Modus handelt, (ii) einer Bandbreite, BW, für den PRACH, die kleiner ist als eine nominale BW, und (iii) einem Empfang eines Downlink-Signals innerhalb eines Schwellenzeitwerts.

7. Vorrichtung (100) nach Anspruch 6, wobei das Downlink-Signal ein Synchronisationssignal/physikalischer Rundfunkkanalblock, SSB, ein Systeminformationsblock Typ 1, SIB1, ein physikalischer Downlink-Steuerkanal, PDCCH und/oder ein physikalischer Downlink-Shared-Kanal vom Typ SIB1, PDSCH, ist.

8. Vorrichtung (100) nach Anspruch 6,
wobei das Downlink-Signal auf der Grundlage einer Sicherstellung einer minimalen Kanalbelegungszeit, COT, gesendet wird und
wobei die minimale COT ein Wert ist, der durch Addition einer Slot-Dauer eines Zufallszugriffskanals, RACH, zum Schwellenzeitwert erhalten wird.

9. Vorrichtung (100) nach Anspruch 8,
wobei der Schwellenzeitwert eine Zeitdauer von einem ersten Zeitpunkt bis zu einem zweiten Zeitpunkt ist,
wobei der erste Zeitpunkt ein Zeitpunkt ist, der um den Schwellenzeitwert vor einem für die Übertragung des PRACH geplanten Zeitpunkt liegt, und
wobei der zweite Zeitpunkt der geplante Übertragungszeitpunkt des PRACH ist.

10. Vorrichtung (100) nach Anspruch 6,
wobei der PRACH ohne sowohl einen Typ-1-CAP als auch einen Typ-2-CAP verworfen wird, basierend auf (i) dem Kanalzugriffsmodus, der der LBE-Modus ist, (ii) der BW für den PRACH, die kleiner als die nominale BW ist, und (iii) dem Nichtempfang des Downlink-Signals innerhalb des Schwellenzeitwerts.

11. Vorrichtung (100) nach Anspruch 6, ferner umfassend:
mindestens einen Tranceiver (106).

12. Ein computerlesbares Speichermedium, das mindestens ein Computerprogramm enthält, das mindestens einen Prozessor (102) dazu veranlasst, Operationen auszuführen,
wobei die Operationen umfassen:
Senden (S2601) eines physikalischen Direktzugriffskanals, PRACH; und
Empfangen (S2603) einer Direktzugriffsantwort, RAR, auf der Grundlage des PRACH, und
**dadurch gekennzeichnet, dass** der PRACH gesendet wird, nachdem ein Uplink-Kanalzugriffsverfahren, CAP, vom Typ 2durchgeführt wurde, basierend auf (i) einem Kanalzugriffsmodus, bei dem es sich um einen Load Based Equipment, LBE, -Modus handelt, (ii) einer Bandbreite, BW, für den PRACH, die kleiner ist als eine noominale Bandbreite, und (iii) einem Empfang eines Downlink-Signals innerhalb eines Schwellenzeitwerts.

## Revendications

1. Procédé d'émission et de réception d'un signal par un équipement utilisateur, UE, dans un système de communication sans fil, le procédé comprenant:
la transmission (S2601) d' un canal physique d'accès aléatoire, PRACH; et
la réception (S2603) d'une réponse d'accès aléatoire, RAR, sur la base du PRACH,
**caractérisé en ce que** le PRACH est transmis après l'exécution d'une procédure d'accès au canal de liaison montante de type 2, CAP, sur la base du fait (i) qu'un mode d'accès au canal est un équipement basé sur la charge, LBE, (ii) qu'une bande passante, BW, du PRACH est plus étroite qu'une BW nominale, et (iii) que la réception d'un signal de liaison descendante ne dépasse pas une valeur de temps seuil.

2. Procédé selon la revendication 1, dans lequel le signal descendant est un bloc de canal physique de synchronisation/diffusion, SSB, un bloc d'informations système de type 1, SIB1, un canal physique de commande de liaison descendante, PDCCH, et/ou un canal physique de liaison descendante partagé SIB1, PDSCH.

3. Procédé selon la revendication 1,
dans lequel le signal descendant est transmis en garantissant un temps d'occupation minimal de canal, COT, et
dans lequel le COT minimal correspond à la valeur obtenue en ajoutant la durée de créneau de canal d'accès aléatoire (RACH) à la valeur de temps seuil.

4. Procédé selon la revendication 3,
dans lequel la valeur de temps seuil correspond à une durée comprise entre un premier point temporel et un deuxième point temporel,
dans lequel le premier point temporel est antérieur au point temporel de transmission planifié du PRACH par la valeur de temps seuil, et
dans lequel le deuxième point temporel est le point temporel de transmission planifié du PRACH.

5. Procédé selon la revendication 1,
dans lequel le PRACH est abandonné en l'absence à la fois d'un CAP de type 1 et d'un CAP de type 2, sur la base du fait que (i) le mode d'accès au canal est le mode LBE, que (ii) la BW du PRACH est inférieure à la BW nominale, et que (iii) le signal descendant n'a pas été reçu au cours de la valeur de temps seuil.

6. Appareil (100) pour un équipement utilisateur, UE, l'appareil (100) comprenant:
au moins un processeur (102); et
au moins une mémoire d'ordinateur (104) connectée fonctionnellement à l'au moins un processeur (102) et configurée pour amener, lorsqu'il est en cours d'exécution, l'au moins un processeur (102) à effectuer les opérations,
les opérations comprenant:
la transmission (S2601) d' un canal physique d'accès aléatoire, PRACH; et
la réception (S2603) d'une réponse d'accès aléatoire, RAR, sur la base du PRACH, et
**caractérisé en ce que** le PRACH est transmis après l'exécution d'une procédure d'accès au canal de liaison montante de type 2, CAP, sur la base du fait (i) qu'un mode d'accès au canal est un équipement basé sur la charge, LBE, (ii) qu'une bande passante, BW, du PRACH est plus étroite qu'une BW nominale, et (iii) que la réception d'un signal de liaison descendante ne dépasse pas une valeur de temps seuil.

7. Appareil (100) selon la revendication 6, dans lequel le signal descendant est un bloc de canal physique de synchronisation/diffusion, SSB, un bloc d'informations système de type 1, SIB1, un canal physique de commande de liaison descendante, PDCCH, et/ou un canal physique de liaison descendante partagé SIB1, PDSCH.

8. Appareil (100) selon la revendication 6,
dans lequel le signal descendant est transmis en garantissant un temps d'occupation minimal de canal, COT, et
dans lequel le COT minimal correspond à la valeur obtenue en ajoutant la durée de créneau de canal d'accès aléatoire (RACH) à la valeur de temps seuil.

9. Appareil (100) selon la revendication 8,
dans lequel la valeur de temps seuil correspond à une durée comprise entre un premier point temporel et un deuxième point temporel,
dans lequel le premier point temporel est antérieur au point temporel de transmission planifié du PRACH par la valeur de temps seuil, et
dans lequel le deuxième point temporel est le point temporel de transmission planifié du PRACH.

10. Appareil (100) selon la revendication 6,
dans lequel le PRACH est abandonné en l'absence à la fois d'un CAP de type 1 et d'un CAP de type 2, sur la base du fait que (i) le mode d'accès au canal est le mode LBE, que (ii) la BW du PRACH est inférieure à la BW nominale, et que (iii) le signal descendant n'a pas été reçu au cours de la valeur de temps seuil.

11. Appareil (100) selon la revendication 6, comprenant en outre:
au moins un émetteur-récepteur (106).

12. Support d'enregistrement lisible par ordinateur comprenant au moins un programme informatique qui amène au moins un processeur (102) à effectuer les opérations,
dans lequel les opérations comprennent:
la transmission (S2601) d' un canal physique d'accès aléatoire, PRACH, et
la réception (S2603) d'une réponse d'accès aléatoire, RAR, sur la base du PRACH, et
**caractérisé en ce que** le PRACH est transmis après l'exécution d'une procédure d'accès au canal de liaison montante de type 2, CAP, sur la base du fait (i) qu'un mode d'accès au canal est un équipement basé sur la charge, LBE, (ii) qu'une bande passante, BW, du PRACH est plus étroite qu'une BW nominale, et (iii) que la réception d'un signal de liaison descendante ne dépasse pas une valeur de temps seuil.
